(19) Europäisches Patentamt / European Patent Office / Office européen des brevets

(11) **EP 2 350 170 B1**

(12) **EUROPEAN PATENT SPECIFICATION**

(45) Date of publication and mention
of the grant of the patent:
**18.10.2017 Bulletin 2017/42**

(51) Int Cl.:
***C08J 3/12*** *(2006.01)*

(21) Application number: **09744282.6**

(22) Date of filing: **23.10.2009**

(86) International application number:
**PCT/US2009/061865**

(87) International publication number:
**WO 2010/059332 (27.05.2010 Gazette 2010/21)**

(54) **ADHESIVE COMPOSITIONS AND METHODS OF MAKING THE SAME**

KLEBSTOFFZUSAMMENSETZUNGEN UND HERSTELLUNGSVERFAHREN DAFÜR

COMPOSITIONS ADHÉSIVES ET LEURS PROCÉDÉS DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.11.2008 US 116059 P**

(43) Date of publication of application:
**03.08.2011 Bulletin 2011/31**

(73) Proprietor: **ExxonMobil Chemical Patents Inc.**
**Baytown, TX 77520 (US)**

(72) Inventors:
• **BERTI, Douglas, A.**
**Houston**
**TX 77062 (US)**
• **JOHNSRUD, David, R.**
**Humble**
**TX 77346 (US)**
• **BYRNE, Patrick, S.**
**Baton Rouge**
**LA 70817 (US)**

(74) Representative: **ExxonMobil Chemical Europe Inc.**
**IP Law Europe**
**Hermeslaan 2**
**1831 Machelen (BE)**

(56) References cited:
| EP-A2- 0 115 307 | DE-A1- 10 048 923 |
| GB-A- 928 120 | GB-A- 1 378 222 |
| US-A- 3 528 841 | US-A- 4 027 067 |
| US-A- 4 151 135 | US-A- 5 041 251 |
| US-A- 5 322 731 | US-B1- 6 228 902 |
| US-B2- 6 616 968 | |

**Description**

## FIELD OF THE INVENTION

This invention relates to adhesive compositions, methods of making the same, and more particularly to agglomeration resistant particles composed of normally tacky plastic materials such as polyolefins and adhesives based thereon.

## BACKGROUND

Conventional polymeric compounds that are inherently "soft and tacky" such as certain polyolefins and adhesives based thereon are difficult to process into pellets by conventional pelletization methods. Conventional materials generally have a low degree of crystallinity and solidify slowly. These materials will either gum up or smear on processing equipment, such as rotary knives of pelletizers. Soft and tacky materials also plug conveying lines and/or agglomerate after being stored for a short period of time, particularly at elevated temperatures. These materials must then be produced and sold in some other less desirable form, such as large solid blocks, powder coated slats, or large volume drums. It would, therefore, be desirable if a process could be developed to produce free flowing particles of these soft and tacky materials.

Pelletized adhesive compositions not only stick or adhere to hands and mechanical handling devices, but also adhere to dirt and other contaminates. As a result, containment during shipment and/or storage periods is a critical aspect for commercial adhesives, or any kind of sticky plastic materials.

In some cases adhesive compositions cannot be shipped as bulk pellets. For example, transportation of pellets in hopper rail cars is not possible because of the risk of agglomerating into a huge mass that will not readily flow out of the hopper car. It is common practice to use cooled, insulated rail cars to facilitate unloading of soft and/or tacky pellets from the cars because the pellets are less soft and tacky at cooler temperatures. For example, ethylene-vinyl acetate (EVA) copolymers are used as adhesives in hot melt adhesive applications. Typically, as vinyl acetate content increases, EVA pellets become softer, tackier, and more prone to agglomeration under their own weight. This inhibits handling of polymer pellets. Accordingly, prior to use the pellets must be forcibly re-dispersed to enable the pellets to flow. Such agglomeration of pellets disrupts end-use operations.

Various conventional techniques have been proposed to prevent soft and/or tacky compositions from agglomerating, including pelletizing the composition and dusting the pellets with various materials. Due to loss of the dust during transport and storage, incorporation of additives into some tacky compositions has been a preferred method of reducing agglomeration. Unfortunately, modifying the composition of tacky compositions is not always a feasible or desirable alternative to dusting techniques.

Accordingly, there is a need for methods of preparing tacky composition particles that resist agglomeration at ambient or elevated temperature and thereby provide an economic means of transportation and storage.

## SUMMARY

The present invention provides a method for preparing agglomeration resistant particles comprising the steps of:

a. providing tacky composition particles having an unconfined yield strength of at least 15 lbs/ft$^2$ (718 Pa) at or above 25°C as measured by ASTM D6773;
b. increasing the tackiness of the tacky composition particles by contacting the tacky composition particle with a first fluid at a temperature of at least 25°C; and
c. contacting the tacky composition particles with an antiblock composition while the tacky composition particles are in contact with the first fluid wherein the first fluid is at a temperature of at least 25°C,

wherein the tacky composition particles are polyolefin pellets and are at least partially coated with the antiblock composition.

In contrast to conventional techniques which coat cooled particles with an antiblock combination, the present methods counter-intuitively increase the temperature of tacky particles before contacting them with antiblock compositions. The present methods yield particles that are resistant to agglomeration, even at elevated storage and transportation temperatures, such as 50°C and above. Thus, particles remain substantially free-flowing even under temperatures, storage times, and compression which might otherwise facilitate caking or agglomeration.

## BRIEF DESCRIPTION OF THE DRAWINGS

Figure 1 is an exemplary schematic diagram of an apparatus for preparing agglomeration resistant particles.
Figure 2 is a graph of crystallization half-life vs. temperature obtained by isothermal DSC testing of compositions prepared according to the present methods.
Figure 3 is an X-Y graph of hardness vs. time for pellets immersed in water and prepared according to the present methods.
Figure 4 is an X-Y graph of hardness vs. time for pellets aged in air and prepared according to the present methods.
Figure 5 is a graph of extent of agglomeration vs. temperature for polymers prepared according to the present methods.
Figure 6 is an exemplary schematic diagram of an apparatus for preparing agglomeration resistant particles.

## DETAILED DESCRIPTION OF ILLUSTRATIVE EMBODIMENTS

Provided are methods for preparing agglomeration resistant particles, particles made from such methods, and apparatus for performing such methods. The provided methods are useful for preparing agglomeration resistant particles composed of tacky compositions, such as adhesives or polymers. The methods include the steps of contacting tacky composition particles with a first fluid at an elevated temperature, and while the tacky composition is in contact with the first fluid, contacting the tacky composition with an antiblock composition. These methods substantially coat the tacky composition with the antiblock composition.

In contrast to conventional techniques which coat cooled particles with an antiblock combination, the present methods counter-intuitively increase the temperature of tacky particles before contacting them with antiblock composition. The present methods yield particles that are resistant to agglomeration, even at elevated storage and transportation temperatures, such as 50°C and above. Thus, particles remain substantially free-flowing even under temperatures, storage times, and compression which might otherwise facilitate caking or agglomeration. Accordingly, the present methods are useful for unitizing tacky compositions.

Although conventional pelletizing processes teach improved results and ease of pelletizing at low tacky composition temperatures, e.g., below the Ring and Ball Softening Point, such processes suffer from disadvantages, such as: (a) not producing pourable particles, (b) requiring more than one coating step, (c) requiring a dusting step thereby creating potential airborne hazards (d) requiring modification in tacky composition, i.e., compromising composition, to achieve particles that resist agglomeration, (e) increased risk of phase separation or die freeze-off resulting from operating at or near crystallization or Ring and Ball softening temperatures during extrusion/pelletization, (f) abnormal pellet formation, i.e., extruded material wrapping around a die face by cutting apparatus, elongated pellets, and formation of poor geometry pellets, and/or (g) requiring additional equipment, e.g., pumps, or mechanical energy to maintain flow rates.

Such conventional methods and compositions are described in U.S. Patent Nos. 7,328,547, 7,232,535, 7,137,235, 7,122,584, 7,101,926, 6,716,527, 6616968, 6,533,564, 6,458,300, 6,426,026, 6,335,095, 6,228,902, 6,120,899, 6,177,516, 5,942,304, 5,895,617, 5,733,645, 5,695,881, 5,650,370, 5,629,050, 5,609,892, 5,594,074, 5,403,528, 5,143,673, 5,041,251, and 4,897,452.

Conventional methods and compositions are also described in U.S. Patent Publication Nos., 2007/0270538, 2006/0093764, 2004/0209082, and 2002/0033131.

## Tacky Compositions

Tacky compositions are compositions that are difficult to unitize due to the tendency to agglomerate or cake. Tacky compositions include polymer composition having an unconfined yield strength of at least about 15 lbs/ft$^2$ (718 Pa) at or above 25°C as measured by ASTM D6773.

Typical tacky compositions include:

- polyolefins, e.g., polyalphaolefins, maleated polyolefins, oxidized polyolefins,

    - polyethylenes, e.g., ethylene -acrylic acid copolymers, ethylene-cyclopentadiene copolymers, ethylene -methacrylate copolymers, ethylene-propylene monomer or EPM, ethylene-propylene-diene monomer or EPDM, ethylene-vinyl acetate copolymers, ethylene -vinyl alcohol copolymers, high density polyethylene, low density polyethylene, very low density polyethylene, linear low density polyethylene, or ethylene higher alpha-olefin copolymers;
    - polypropylenes, including soft polypropylene (either homopolymers, co- or ter-polymers), random copolymers, impact copolymers (ICP), or heterophasic polypropylene and thermoplastic vulcanized or TPV-based polypropylene;

- polybutenes, including poly 1-butene hompolymers and copolymers or polyisobutylene;

• thermoplastic olefin elastomers - unvulcanized (TPO), thermoplastic olefin elastomers - vulcanized (TPE), polypropylene cross-linked EPDM rubber blends, •or blends thereof.

Typical composition characteristics that result in difficulty in processing and/or unitization include one or more of: a very narrow melting range, a low temperature melting range, a low viscosity of molten or semi-solid materials, slow thermal conductivity and therefore slow ability to cool rapidly enough for processing, proclivity to undergo phase separation on cooling, surface tack, poor miscibility of liquids during blending processes, and extreme temperature variance from mixing/blending stages to finishing/unitization stages. Pelletization of these materials via conventional processes may gum-up or smear-on the rotary knives and surfaces of the die or block of an extrusion apparatus.

Polypropylene, or propylene polymers, are polymers composed of propylene monomers. As used herein "polypropylene", "polypropylene polymer(s)", or "propylene polymer(s)" mean homopolymers, copolymers, terpolymers, higher order copolymers, or interpolymers made from propylene derived units, or combinations thereof.

As used herein "homopolymer" means polymers resulting from the polymerization of a single monomer, i.e., a polymer consisting essentially of a single type of repeating unit.

As used herein, the term "copolymer(s)" refers to polymers formed by the polymerization of at least two different monomers. For example, the term "copolymer" includes the copolymerization reaction product of propylene and an $\alpha$-olefin, such as for example, 1-hexene.

"Polypropylene" includes stereoregular polypropylene, stereoregular polypropylene segments separated by amorphous polypropylene, amorphous polypropylene, polypropylene copolymers, polypropylene terpolymers, and higher order polypropylene copolymers. As used herein "stereoregular polypropylene" means stereoregular propylene sequences long enough to crystallize under conditions known to those skilled in the art.

Polypropylene also includes heterophasic polypropylene which are blends of polypropylene and an elastomer. These are either produced in a single polymerization process involving the use of series reactors where the polypropylene component is produced in the first reactor and one or 2 other ethylene copolymers are produced in a second and eventually a third reactor or in a process where the polypropylene component and the rubber component are blended in a post polymerization process. Those produced in a polymerization process are usually called ICP (Impact copolymer) and those produce in a blending process are called TPO (thermoplastic olefin). In certain cases the dispersed rubber phase can vulcanized and these blends are called TPV (thermoplastic vulcanizates) or DVA (dynamically vulcanized Alloys).

Preferably, polypropylene polymers are propylene-based copolymer, i.e., propylene copolymer, which may also be referred to as a propylene-$\alpha$-olefin copolymer. Propylene copolymer includes one or more units, i.e., mer units, derived from propylene, one or more comonomer units derived from ethylene or $\alpha$-olefins including from 4 to 20 carbon atoms. Optionally one or more comonomer units derive from dienes.

In one or more embodiments, the $\alpha$-olefin comonomer units derive from ethylene, 1-butene, 1-hexane, 4-methyl-1-pentene and/or 1-octene. Exemplary alpha-olefins are selected from the group consisting of ethylene, butene-1, pentene-1,2-methylpentene-1,3-methylbutene-1, hexene-1,3-methylpentene-1,4-methylpentene-1,3,3-dimethylbutene-1, heptene-1, hexene-1, methylhexene-1, dimethylpentene-1, trimethylbutene-1, ethylpentene-1, octene-1, methylpentene-1, dimethylhexene-1, trimethylpentene-1, ethylhexene-1, methylethylpentene-1, diethylbutene-1, propylpentane-1, decene-1, methylnonene-1, nonene-1, dimethyloctene-1, trimethylheptene-1, ethyloctene-1, methylethylbutene-1, diethylhexene-1, dodecene-1, and hexadodecene-1.

Exemplary diene comonomer units include 5-ethylidene-2-norbornene, 5-vinyl-2-norbornene, divinyl benzene, 1,4-hexadiene, 5-methylene-2-norbornene, 1,6-octadiene, 5-methyl-1,4-hexadiene, 3,7-dimethyl-1,6-octadiene, 1,3-cyclopentadiene, 1,4-cyclohexadiene, and dicyclopentadiene.

Propylene polymers may include from 1 weight percent (wt.%) to 50 wt.% of $\alpha$-olefin comonomers, based on the weight of the propylene copolymer. Preferably, propylene copolymers include from 1 wt.% to 35 wt.%, from 1 wt.% to 30 wt.%, from 1 wt.% to 25 wt.%, or from 1 wt.% to 20 wt.% of $\alpha$-olefin comonomers. More preferably, propylene copolymers include from 1 wt.% to 18 wt.%, from 1 wt.% to 16 wt.% of $\alpha$-olefin comonomers. Still more preferably, propylene copolymers include from 1 wt.% to 12 wt.%, no more than 8 wt.% of $\alpha$-olefin comonomers. In one or more embodiments propylene copolymers include from 3.0 to to 7.0 wt.% of $\alpha$-olefin comonomers. In other embodiments, propylene copolymers include from 4 to 6 wt.% of $\alpha$-olefin comonomers. In still other embodiments, propylene copolymers include from 1 to 5 wt.% or from 3 to 5 wt.% of $\alpha$-olefin comonomers.

In some embodiments, polypropylenes have a melt index in dg/min ("MI"), according to ASTM D-1238 at 2.16 kg and 190°C, of not more than 10, or not more than 6.5, or not more than 6, or not more than 5.5, and in other embodiments not more than 5.

In some embodiments, the melt flow rate ("MFR") of polypropylenes, as measured according to ASTM D-1238 at 2.16 kg weight and 230°C, is at least 0.2 dg/min, or of at least 0.2 dg/min, or at least 0.5 dg/min, and in other embodiments at least 1.0 dg/min. Polypropylenes have a melt flow rate of not more than 3500 dg/min, or not more than 3000 dg/min, or not more than 2500 dg/min, or not more than 2000 dg/min, or not more than 1000 dg/min, or not more than 350 dg/min, or not more than 100 dg/min. In one or more embodiments, polypropylenes have an MFR of from 0.5 dg/min to 2000 dg/min, or from 1 dg/min to 350 dg/min, or from 1 dg/min to 30 dg/min, or from 10 dg/min to 30 dg/min, and in other embodiments from 1 dg/min to 10 dg/min. In a preferred embodiment, polypropylenes have an MFR of from 8 dg/min to 2000 dg/min.

In some embodiments, polypropylenes have a Mooney viscosity [ML (1+4) @ 125 °C], as determined according to ASTM D1646, of less than 100, or less than 75, or less than 60, and in other embodiments less than 30.

Polypropylenes have a weight average molecular weight (Mw) of 300,000 or less, preferably 100,000 or less, preferably 80,000 or less, preferably 70,000 or less, more preferably 60,000 or less, more preferably 50,000 or less, more preferably 40,000 or less, more preferably 30,000 or less, more preferably 20,000 or less, more preferably 10,000 or less. In some embodiments Mw is also at least 10,000, more preferably at least 15,000.

In one embodiment, polypropylenes have a number average molecular weight (Mn) of less than 50,000 g/moles, less than 40,000 g/mole, less than 30,000 g/mole, or less than 20,000 g/mole. In another embodiment, polypropylenes have an Mc of from 2,500 to 50,000 g/mole, or from 5,000 to 50,000 g/mole, or from 10,000 to 50,000 g/mole, and in other embodiments a Mn of from 25,000 to 50,000 g/mole.

The molecular weight distribution index (MWD=(Mw/Mn)) of polypropylenes is from 1 to 40, or from 1 to 5, or from 1.8 to 5, and in other embodiments from 1.8 to 3. Techniques for determining the molecular weight (Mn and Mw) and molecular weight distribution (MWD) may be found in U.S. Pat. No. 4,540,753, Verstrate et al., 21 Macromolecules, 3360 (1988), and T. Sun, P. Brant, R. R. Chance, and W. W. Graessley, Macromolecules, Volume 34, Number 19, 6812-6820, (2001).

The propylene branching index, g', is measured using Size Exclusion Chromatography (SEC) with an on-line viscometer (SEC-VIS) and are reported at each molecular weight in the SEC trace. The branching index g' is defined as:

$$g' = \frac{\eta_b}{\eta_l}$$

where $\eta_b$ is the intrinsic viscosity of the branched polymer, $\eta_1$ is the intrinsic viscosity of a linear polymer of the same viscosity-averaged molecular weight (Mv) as the branched polymer, $\eta_1 = KM_v{}^{\alpha}$, and K and $\alpha$ are measured values for linear polymers and should be obtained on the same SEC-DRI-LS-VIS instrument as the one used for branching index measurement.

For polypropylene samples provided herein, K=0.0002288 and $\alpha$ = 0.705 were used. The SEC-DRI-LS-VIS method obviates the need to correct for polydispersities, since the intrinsic viscosity and the molecular weight are measured at individual elution volumes, which contain narrowly dispersed polymer. Linear polymers selected as standards for comparison should be of the same viscosity average molecular weight and comonomer content. Linear character for polymer containing C2 to C10 monomers is confirmed by Carbon-13 NMR the method of Randall (Rev. Macromol. Chem. Phys., C29 (2&3), p. 285-297).

For polypropylene samples provided herein, K=0.0002288 and $\alpha$=0.705 were used. The SEC-DRI-LS-VIS method obviates the need to correct for polydispersities, since the intrinsic viscosity and the molecular weight are measured at individual elution volumes, which contain narrowly dispersed polymer. Linear polymers selected as standards for comparison should be of substantially the same viscosity average molecular weight and comonomer content. Linear character for polymer containing C2 to C10 monomers is confirmed by Carbon-13 NMR the method of Randall (Rev. Macromol. Chem. Phys., C29 (2&3), p. 285-297).

The size exclusion chromatograph is operated with three Polymer Laboratories PLgel 10mm Mixed-B columns, a nominal flow rate 0.5 cm3 /min, and a nominal injection volume 300 microliters is common to both detector configurations. The various transfer lines, columns and differential refractometer (the DRI detector, used mainly to determine eluting solution concentrations) are contained in an oven maintained at 135°C.

A typical LALLS detector is the model 2040 dual-angle light scattering photometer (Precision Detector Inc.). Its flow cell, located in the SEC oven, uses a 690 nm diode laser light source and collects scattered light at two angles, 15° and 90°. Only the 15° output was used in the following experiments. Its signal is sent to a data acquisition board (National Instruments) that accumulates readings at a rate of 16 per second. The lowest four readings are averaged, and then a proportional signal is sent to the SEC-LALLS-VIS computer. The LALLS detector is placed after the SEC columns, but before the viscometer.

A typical viscometer is a high temperature Model 150R (Viscotek Corporation). It consists of four capillaries arranged in a Wheatstone bridge configuration with two pressure transducers. One transducer measures the total pressure drop across the detector, and the other, positioned between the two sides of the bridge, measures a differential pressure. The specific viscosity for the solution flowing through the viscometer is calculated from their outputs. The viscometer is inside the SEC oven, positioned after the LALLS detector but before the DRI detector.

Solvent for the SEC experiment was prepared by adding 6 grams of butylated hydroxy toluene (BHT) as an antioxidant to a 4 liter bottle of 1,2,4 Trichlorobenzene (TCB)(Aldrich Reagent grade) and waiting for the BHT to solubilize. The TCB mixture was then filtered through a 0.7 micron glass pre-filter and subsequently through a 0.1 micron Teflon filter. There was an additional online 0.7 micron glass pre-filter/0.22 micron Teflon filter assembly between the high pressure pump and SEC columns. The TCB was then degassed with an online degasser (Phenomenex, Model DG-4000) before entering the SEC.

Polymer solutions were prepared by placing dry polymer in a glass container, adding the desired amount of TCB, then heating the mixture at 160 °C with continuous agitation for 2 hours. All quantities are measured gravimetrically. The TCB densities used to express the polymer concentration in mass/volume units are 1.463 g/ml at room temperature and 1.324 g/ml at 135 °C. The injection concentration ranged from 1.0 to 2.0 mg/ml, with lower concentrations being used for higher molecular weight samples.

Prior to running each sample the DRI detector and the injector were purged. Flow rate in the apparatus was then increased to 0.5 ml/minute, and the DRI was allowed to stabilize for 8-9 hours before injecting the first sample. The argon ion laser was turned on 1 to 1.5 hours before running samples by running the laser in idle mode for 20-30 minutes and then switching to full power in light regulation mode.

The polypropylene branching index is less than 1.0 measured at the Mz of the polymer. Preferably the branching index is 0.95 or less, 0.9 or less, 0.85 or less, 0.8 or less, 0.7 or less, 0.6 or less, 0.5 or less as measured at the Mz of the polymer.

In some embodiments propylene polymers have a peak melting point (Tm) between 40 and 250°C, or between 60 and 190°C, or between 60 and 150°C, or between 80 and 130°C. In some embodiments the peak melting point is between 60 and 160°C. In other embodiments the peak melting point is between 124-140°C. In other embodiments the peak melting temperature is between 40-130°C.

In some embodiments propylene polymers have a viscosity (also referred to a Brookfield Viscosity or Melt Viscosity) of 90,000 mPa•sec or less at 190°C (as measured by ASTM D 3236 at 190°C); or 80,000 or less, or 70,000 or less, or 60,000 or less, or 50,000 or less, or 40,000 or less, or 30,000 or less, or 20,000 or less, or 10,000 or less, or 8,000 or less, or 5000 or less, or 4000 or less, or 3000 or less, or 1500 or less, or between 250 and 6000 mPa•sec, or between 500 and 5500 mPa•sec, or between 500 and 3000 mPa•sec, or between 500 and 1500 mPa•sec, and/or a viscosity of 8000 mPa•sec or less at 160°C (as measured by ASTM D 3236 at 160°C); or 7000 or less, or 6000 or less, or 5000 or less, or 4000 or less, or 3000 or less, or 1500 or less, or between 250 and 6000 mPa•sec, or between 500 and 5500 mPa•sec, or between 500 and 3000 mPa•sec, or between 500 and 1500 mPa•sec. In other embodiments the viscosity is 200,000 mPa•sec or less at 190 ° C, depending on the application. In other embodiments the viscosity is 50,000 mPa•sec or less depending on the applications.

In some embodiments propylene polymers have a heat of fusion of 100 J/g or less, 70 J/g or less, or 60 J/g or less, or 50 J/g or less; or 40 J/g or less, or 30 J/g or less, or 20 J/g or less and greater than zero, or greater than 1 J/g, or greater than 10 J/g, or between 20 and 50 J/g.

In some embodiments propylene polymers have a Shore A Hardness as measured by ASTM 2240 of 95 or less, 70 or less, or 60 or less, or 50 or less, or 40 or less or 30 or less, or 20 or less. In other embodiments the propylene polymer has a Shore A Hardness of 5 or more, 10 or more, or 15 or more. In certain applications, such as packaging, the Shore A Hardness is preferably 60 to 70.

In some embodiments propylene polymers have a Shear Adhesion Fail Temperature (SAFT), as measured by ASTM 4498, of 200°C or less, or from 40 to 150°C, or from 60 to 130°C, or from 65 to 110°C, or from 70 to 80°C. In other embodiments the polypropylene has a SAFT of from 130 to 140°C.

In some embodiments propylene polymers have a Dot T-Peel of between 1 Newton and 10,000 Newtons, or from 3 and 4000 Newtons, or between 5 and 3000 Newtons, or between 10 and 2000 Newtons, or between 15 and 1000 Newtons.

Dot T-Peel is determined according to ASTM D 1876, except that the specimen is produced by combining two 1 inch by 3 inch (2.54 cm x 7.62 cm) Kraft paper substrate cut outs with a dot of adhesive with a volume that, when compressed under a 500 gram weight occupies 1 square inch (6.45 cm$^2$) of area (1 inch = 2.54 cm). Once made all the specimens are pulled apart in side by side testing (at a rate of 2 inches (5.08 cm) per minute) by a machine that records the destructive force of the insult being applied. The maximum force achieved for each sample tested was recorded and averaged, thus producing the Average Maximum Force which is reported as the Dot T-Peel.

In some embodiments propylene polymers have a crystallization point (Tc) between 20 and 110°C. In some embodiments the Tc is between 70 to 100°C. In other embodiments the Tc is between 30 to 80°C. In other embodiments the Tc is between 20 to 50°C.

In some embodiments propylene polymers have a melt index ratio (I10/I2) of 20 or less, preferably 10 or less, preferably 6.5 or less, preferably 6.0 or less, preferably 5.5 or less, preferably 5.0 or less, preferably 4.5 or less, preferably between 1 and 6.0. (I10 and I2 are measured according to ASTM 1238 D, 2.16kg, 190°C).

In another embodiment, propylene polymers have a melt index (as determined by ASTM 1238 D,2.16 kg, 190 °C) of 25 dg/min or more, preferably 50 dg/min or more, preferably 100 dg/min or more, more preferably 200dg/min or more, more preferably 500 dg/mn or more, more preferably 2000 dg/min or more.

Preferably, polyolefin compositions include at least 50 wt.% propylene, preferably at least 60% propylene, alternatively at least 70% propylene, alternatively at least 80% propylene, or at least 90 weight percent propylene.

In some embodiments polyolefin compositions have an amorphous content of at least 40 wt.%. Preferably, the polyolefin composition has an amorphous content of at least 50 wt.%, alternatively at least 60 wt.%, alternatively at least 70 wt.%. In some embodiments the polyolefin composition has an amorphous content from 50 wt.%, to 99 wt.%. Percent amorphous content is determined using Differential Scanning Calorimetry measurement according to ASTM E 794-85.

In some embodiments polyolefin compositions have a crystallinity of 40 wt.% or less. Preferably, the polyolefin composition has a crystallinity of 30 wt.% or less, alternatively 20 wt.% or less. In some embodiments, the polyolefin composition has a crystallinity of from 5 wt.% to 40 wt.% or from 10 wt.% to 30 wt.%. Percent crystallinity content is determined using Differential Scanning Calorimetry measurement according to ASTM E 794-85.

In some embodiments, polyolefin compositions have a molecular weight distribution (Mw/Mn) of at least 1.5, preferably at least 2, preferably at least 5, preferably at least 10, even alternatively at least 20. In other embodiments the Mw/Mn is 20 or less, 10 or less, even 5 or less.

In some embodiments polyolefin compositions have at least two molecular weight fractions present at greater than 2 wt.%, preferably greater than 20 wt.%, each based upon the weight of the polymer as measured by gel permeation chromatography (GPC). The fractions can be identified on a GPC trace by observing two distinct populations of molecular weights. For example, the weight fractions are confirmed as percent by a GPC trace showing a peak at 20,000 Mw and another peak at 50,000 Mw where the area under the first peak represents more than 2 wt.% of the polymer and the area under the second peak represents more than 2 wt.% of the polymer. One skilled in the art of gel permeation chromatography will recognize the many possible combinations of molecular weight fractions.

In some embodiments polyolefin compositions have 20 wt.% or more of hexane room temperature soluble fraction, and 70 wt.% or less, preferably 50 wt. % or less of Soxhlet boiling heptane insolubles, based upon the weight of the polyolefin composition.

Soxhlet heptane insoluble refers to one of the fractions obtained when a sample is fractionated using successive solvent extraction technique. The fractionations are carried out in two steps: one involves room temperature solvent extraction, the other soxhlet extraction. In the room temperature solvent extraction, about one gram of polymer is dissolved in 50 ml of solvent (e.g., hexane) to isolate the amorphous or very low molecular weight polymer species. The mixture is stirred at room temperature for about 12 hours. The soluble fraction is separated from the insoluble material using filtration under vacuum. The insoluble material is then subjected to a Soxhlet extraction procedure. This involves the separation of polymer fractions based on their solubility in various solvents having boiling points from just above room temperature to 110°C. The insoluble material from the room temperature solvent extraction is first extracted overnight with a solvent such as hexane and heptane (Soxhlet); the extracted material is recovered by evaporating the solvent and weighing the residue. The insoluble sample is then extracted with a solvent having higher boiling temperature such as heptane and after solvent evaporation, it is weighed. The insolubles and the thimble from the final stage are air-dried in a hood to evaporate most of the solvent, then dried in a nitrogen-purged vacuum oven. The amount of insoluble left in the thimble is then calculated, provided the tare weight of the thimble is known.

In some embodiments, the polyolefin composition has a heptane insoluble fraction of about 70 weight% or less, based upon the weight of the starting polymer, and the heptane insoluble fraction has branching index g' of 0.9 (preferably 0.7) or less as measured at the Mz of the polymer. In a preferred embodiment the composition also has at least about 20 weight% hexane soluble fraction, based upon the weight of the starting polymer. In another embodiment, the polyolefin composition has a heptane insoluble fraction of about 70 weight% or less, based upon the weight of the starting polymer and a Mz between 20,000 and 5000,000 of the heptane insoluble portion. In a preferred embodiment the composition also has at least 20 weight% hexane soluble fraction, based upon the weight of the starting polymer. In another embodiment the polymers produced have a hexane soluble portion of at least about 20 wt.% , based upon the weight of the starting polymer.

In some embodiments polyolefin compositions include propylene and from 0 to 50 mole % ethylene, preferably from 0 to 30 mole % ethylene, more preferably from 0 to 15 mole % ethylene, more preferably from 0 to 10 mole % ethylene, more preferably from 0 to 5 mole % ethylene.

In preferred embodiments polyolefin compositions include propylene and from 0 to 50 mole % butene, preferably from 0 to 30 mole % butene, more preferably from 0 to 15 mole % butene, more preferably from 0 to 10 mole % butene, more preferably from 0 to 5 mole % butene.

In preferred embodiments polyolefin compositions include propylene and from 0 to 50 mole % hexene, preferably from 0 to 30 mole % hexene, more preferably from 0 to 15 mole % hexene, more preferably from 0 to 10 mole % hexene, more preferably from 0 to 5 mole % hexene.

In preferred embodiments polyolefin compositions include terpolymers with propylene and from 0 to 70 mole% of butene and ethylene. In the terpolymer, butene can vary from 5 to 65 mole% and ethylene from 5 to 65 mole%.

Exemplary polyolefin compositions are composed of propylene homopolymers and copolymers composed of and, optionally, additional additives:

|  | A | B | C | D | E |
|---|---|---|---|---|---|
| Propylene Polymer | 90.3-91.9 | 90.3-91.9 | 91.3-92.9 | 84.3-85.9 | 88.3-89.9 |
| Hexene as % of Propylene Polymer | 0 | 9-11 | 9-11 | 5.4-6.6 | 9-11 |
| Wax (wt.%) | 6.4-7.6 | 7.3-8.8 | 4.5-5.5 | 1.8-2.2 | 0 |
| Maleated Polypropylene (wt.%) | 1.3-1.5 | 0 | 1.8-2.2 | 0 | 4.55-5.45 |
| Tackifier (wt.%) | 0 | 0 | 0 | 11-13 | 4.55-5.45 |

The propylene polymer component of exemplary compositions A-E preferably exhibit a branching index as described above and the following properties:

|  | A | B | C | D | E |
|---|---|---|---|---|---|
| Melt Viscosity @ 190°C, (cps) | 750-1150 | 650-1000 | 650-1000 | 1500-2100 | 12000-17000 |
| Delta Hf by DSC (KJ/Kg) | 35-45 | 35-47 | 35-47 | 18-24 | 12-16 |
| Tm by DSC, (°C) | 110-140 | 110-135 | 110-135 | 95-115 | 85-110 |

The exemplary compositions A-E preferably have the following properties:

|  | A | B | C | D | E |
|---|---|---|---|---|---|
| Set Time, (Seconds) | 2.5 max | 2 max | 2.5 max | 3.5 max | -- |
| Open Time, (Seconds) | ~20 | ~20 | ~26 | >40 | ~15 |
| % Adhesion |  |  |  |  |  |
|    Room Temp. | >90 | >90 | >90 | >100, 3gsm | -- |
|    0°C | >50 | >50 | >90 | >400, 6gsm | -- |
|    -18°C | >10 | >20 | >80 | -- | >80 @ 6°C |
| Delta Hf by DSC (KJ/Kg) | 52-65 | 50-60 | 47-63 | 18-24 | 16-21 |
| Softening Point, (°C) | 128-138 | 118-128 | 118-128 | 118-128 | 118-128 |

Polyolefin compositions are prepared by any conventional synthesis processes. Preferably, polyolefin compositions are prepared utilizing one or more metallocene catalysts. One or more reactors may be utilized to prepare polymer compositions. Multiple reactors may be operated in series or in parallel. Reaction components, catalyst systems, and/or optional modifiers are added in batches or continuously as a solution or slurry. Catalyst system components are added either separately to the reactor, activated in-line just prior to the reactor, or preactivated and pumped as an activated solution or slurry to the reactor. A preferred method is two solutions activated in-line.

In single catalyst systems, polyolefin compositions containing amorphous and semi-crystalline components may be prepared in a single reactor to yield desired property balance. In particular, aPP-g-scPP branch structures may be produced in-situ in a continuous solution reactor.

In multiple catalyst systems, at least one catalyst is selected as being capable of producing essentially atactic polymer, e.g., atactic polypropylene, and at least one other catalyst is selected as being capable of producing isotactic polymer, isotactic polypropylene under the polymerization conditions utilized.

For propylene based systems, preferably, polymerization conditions yield incorporation of aPP and iPP polymer chains within the in-reactor blend such that an amount of amorphous polypropylene present in the POA polymer is grafted to isotactic polypropylene, represented herein as (aPP-g-iPP) and/or such that an amount of isotactic polypropylene is grafted to amorphous polypropylene, represented herein as (iPP-g-aPP). Preferably, the polymers are prepared in a solution phase, slurry, or bulk phase polymerization process.

In one embodiment, propylene polymers are prepared as a reactor blend using a multi catalyst system. A first catalyst is a stereorigid transition metal compound used to produce the semi-crystalline polypropylene macromonomers, which is selected from the group consisting of: (a) racemic bridged bis(indenyl) zirconocenes or hafnocenes, (b) rac-dimethylsilyl-bridged bis(indenyl) zirconocene or hafnocene, (c) rac-dimethylsilyl bis(2-methyl-4-phenylindenyl) zirconium or hafnium dichloride or dimethyl, (d) rac-dimethylsilyl-bridged bis(indenyl) hafnocene such as rac-dimethylsilyl bis(indenyl)hafnium dimethyl or dichloride. At least one additional catalyst used to produce amorphous polypropylene macromonomers is selected from the group consisting of: (a) 1,1'-bis(4-triethylsilylphenyl)methylene-(cyclopentadienyl)(2,7-di-tertiary-butyl-9-fluorenyl)hafnium dimethyl, (b) di(p-triethylsilylphenyl)methylene(cyclopentadienyl)(3,8-di-t-butylfluorenyl) zirconium dichloride, (c) di(p-triethylsilylphenyl)methylene(cyclopentadienyl)(3,8-di-t-butylfluorenyl) hafnium dichloride, (d) di(p-triethylsilylphenyl)methylene(cyclopentadienyl) (3,8-di-t-butylfluorenyl) zirconium dimethyl, or (e) di(p-triethylsilylphenyl)methylene (cyclopentadienyl)(3,8-di-t-butylfluorenyl) hafnium dimethyl.

In one embodiment, the tacky composition comprises a polyolefin composition comprising a propylene polymer having: (a) a Dot T-Peel of 1 Newton or more on Kraft paper, (b) a Mw of 10,000 to 100,000, and (c) a branching index (g') of: (i) from 0.4 to 0.98 measured at the Mz of the polyolefin when the polyolefin has an Mw of 10,000 to 60,000, or (ii) from 0.4 to 0.95 measured at the Mz of the polyolefin when the polyolefin has an Mw of 10,000 to 100,000.

In one embodiment, the tacky composition comprises a polyolefin composition comprising a propylene-hexene copolymer having: (a) a Dot T-Peel of 1 Newton or more on Kraft paper, (b) a Mw of 10,000 to 100,000, (c) a branching index (g') of: (i) from 0.4 to 0.98 measured at the Mz of the polyolefin when the polyolefin has an Mw of 10,000 to 60,000, or (ii) from 0.4 to 0.95 measured at the Mz of the polyolefin when the polyolefin has an Mw of 10,000 to 100,000, and (d) a hexene comonomer content of less than 25 wt.%.

In one embodiment, the tacky composition comprises a polyolefin composition comprising a propylene-octene copolymer having: (a) a Dot T-Peel of 1 Newton or more on Kraft paper, (b) a Mw of 10,000 to 100,000, and (c) a branching index (g') of: (i) from 0.4 to 0.98 measured at the Mz of the polyolefin when the polyolefin has an Mw of 10,000 to 60,000, or (ii) from 0.4 to 0.95 measured at the Mz of the polyolefin when the polyolefin has an Mw of 10,000 to 100,000.

**Antiblock Compositions**

Antiblock compositions inhibit particle blocking i.e., caking, agglomerating, aggregating and/or sticking, when at least partially coated on the surface of particles in a sufficient amount. Antiblock compositions include powders, silicones, surfactants, waxes, polymers, and combinations thereof.

Antiblock compositions include organic or inorganic compounds such as those selected from the group consisting of talc, mica, calcium carbonate, finely divided or fumed silica, organic acids, metal organic esters, cellulose derivatives, alumina trihydrate, marble dust, cement dust, clay, feldspar, alumina, magnesium oxide, magnesium hydroxide, antimony oxide, zinc oxide, barium sulfate, aluminum silicate, calcium silicate, titanium dioxide, titanates, chalk, powdered polymers, or combinations thereof Some antiblock compositions exhibit a TMA of greater than 75 °C, such as powdered polyethylene, polystyrene, and polypropylene. The aforementioned antiblocking compositions may be employed in purified form or in mixtures. The antiblocking compositions may be employed in any form; however, powders are generally preferable.

Preferably, the antiblock composition is a polymeric powder, a salt of an organic acid, e.g. calcium stearate, or combination thereof. Exemplary antiblock compositions are composed of Ligafluid, which is a calcium stearate dispersion commercially available from Peter Greven Fett-Chemie. Another exemplary antiblock composition is polyethylene powder such as low density polyethylene, which is commercially available as HA2454 from E.I. Du Pont De Nemours and Company. In alternative embodiments combinations of Ligafluid and HA2454 are utilized.

Tacky compositions are contacted with an effective amount of antiblock composition. The quantity of an effective amount depending upon the anti-blocking agent, tacky composition polymer, and temperature of each composition when contacted. It is not necessary that each particle or pellet be totally covered with anti-blocking agent. In addition, it is not necessary that every particle be covered with any anti-blocking agent. Usually, the particles are sufficiently coated such that the average amount of surface coating is above 50 percent. Typically, an effective amount of anti-blocking agent is that amount which decreases the unconfined yield strength of the tacky composition by at least 20 percent, preferably by at least 30 percent or at least 50 percent. In some embodiments, the unconfined yield strength of the tacky composition is decreased by 100 percent or more, or even by 1000 percent or more.

In some embodiments the tacky composition is substantially coated with at least 0.05 wt.%, based on the total weight of the tacky composition particles. Preferably, the tacky composition is substantially coated with at least 0.1 wt.%, or at least 0.3 wt.%, or at least 0.5 wt.%, or at least 0.7 wt.%, or at least 0.8 wt.%, or at least 1.0 wt.%, or at least 1.5 wt.%, based on the total weight of the tacky composition particles.

**Methods**

Methods for preparing agglomeration resistant particles include the steps of: providing tacky composition particles, increasing the tackiness of the tacky composition particles, e.g., increasing ambient temperature, and contacting the tacky composition particles with an antiblock composition so that the tacky composition particles are at least partially coated with the antiblock composition.

Tacky material may be coated several different ways, including simple admixing, agitation, tumbling, airveying, strand pelletizing, under water pelletizing, and combinations thereof. Exemplary blending equipment/processes include any mechanical means of moving the pellets such as simple tumbling, or blending in a conical rotating vessel, ribbon blender, drum tumbler, paddle blender, agglomeration pan, fluidized bed pneumatic conveyor under air or inert gas, stirring, shaking, screw conveyor or mixing pellets through recirculation in vessels (e.g. silos). Strand pelletizing processes extrude tacky materials into strands that are then dusted and cut into pellets.

The tacky composition and the antiblock agent are contacted at any temperature that does not cause the antiblock agent to evaporate, or become too viscous, or significantly react with the tacky composition. Such temperatures often vary depending upon the components of the composition but typically are from -10 to 200°C, or from 0 to 150°C, or from 30 to 100 °C. In some embodiments, the antiblock composition and the tacky composition are contacted at a temperature above 25°C or above 30°C, or above 35°C, or above 50°C, or above 60°C, or above 70°C. In other embodiments, the antiblock composition and the tacky composition are contacted at a temperature of from 25°C to 75°C or from 25°C to 50°C or from 25°C to 40°C. In embodiments, where the tacky composition is crystallizable, the tacky composition and the antiblock agent are preferably contacted at temperature that induces crystallization in the tacky composition.

In one embodiment, methods for preparing agglomeration resistant particles contact the tacky composition and the antiblock composition at a temperature near or above the glass transition temperature (Tg) of the tacky composition. Thus, the tacky composition and antiblock composition are contacted at Tg of the tacky composition, or 5°C or more above Tg, or 10°C or more above Tg, or 15°C or more above Tg, or 20°C or more above Tg.

In one embodiment, methods for preparing agglomeration resistant particles contact the tacky composition and the antiblock composition at a temperature near or above the Ring and Ball softening temperature of the tacky composition. Thus, the tacky composition and antiblock composition are contacted at the Ring and Ball softening temperature of the tacky composition, or 5°C or more above, or 10°C or more above, or 15°C or more above, or 20°C or more above the Ring and Ball softening temperature of the tacky composition.

In one or more embodiments, the present methods prepare particles of tacky material that are substantially pourable, free-flowing particles that resist blocking. "Pourable" means the coated particles will flow through a funnel and yield a pourability value (according to ASTM D1895 Method B) both initially and after elevated temperature storage. Preferably, the free flowing particles have an initial pourability value of less than two seconds, or less than 1.8 seconds, or less than 1.6 seconds, or less than 1.5 seconds, or less than 1.4 seconds.

Preferably, the tacky composition and the antiblock composition are contacted while immersed in a first fluid, e.g., underwater pelletizing apparatus. For example, the tacky composition, or components thereof, is charged into a vessel or an extruder to be melted, sheared, and/or mixed. The vessel may be at atmospheric pressure, pressurized, or under vacuum and may be unpurged or purged with air or an inert gas such as nitrogen, argon, etc. Pressure, vacuum, and purging, if any, may be applied sequentially or continuously in any combination and order. The requisite energy converts the formulation to a molten or semi-solid mixture or liquid which flows suitably by gravity or under pressure when released in batch processing or continuous flow processing. The applied energy may be thermal and/or mechanical in the form of low, medium, or high shear as necessitated by the formulation requirements which directly and significantly impacts the temperature of the molten, semi-solid or liquid tacky composition.

The temperature of the first fluid may vary depending upon the components of the composition but typically are from -10 to 200°C, or from 0 to 150°C, or from 30 to 100 °C. In some embodiments, the temperature of the first fluid is above 25°C or above 30°C, or above 35°C, or above 50°C, or above 60°C, or above 70°C. In other embodiments, the first fluid are contacted at a temperature of from 25°C to 75°C or from 25°C to 50°C or from 25°C to 40°C. In embodiments, where the tacky composition is crystallizable, the temperature of the first fluid is at a temperature that induces crystallization in the tacky composition.

In one embodiment, the temperature of the first fluid is near or above the glass transition temperature (Tg) of the tacky composition. Thus, the temperature of the first fluid is at the Tg of the tacky composition, or 5°C or more above Tg, or 10°C or more above Tg, or 15°C or more above Tg, or 20°C or more above Tg.

In one embodiment, the temperature of the first fluid is near or above the Ring and Ball softening temperature of the tacky composition. Thus, the tacky composition and antiblock composition are contacted at the Ring and Ball softening temperature of the tacky composition, or 5°C or more above, or 10°C or more above, or 15°C or more above, or 20°C or more above the Ring and Ball softening temperature of the tacky composition.

For example, the tacky composition is extruded to an underwater pelletizer where it contacts a first fluid that includes the antiblock composition. Underwater pelletizing includes the steps of extruding the tacky material through the orifice of a die plate that is immersed in a first fluid that contains the antiblock composition, cutting said plastic material as it is extruded while in contact with the first fluid to form particles coated with the antiblock composition, and separating the particles from the first fluid. Exemplary underwater pelletizers are taught by U.S. Patent Nos. 4,569,810 and 4,663,099.

In an underwater pelletizer, a pressurized melt of tacky composition proceeds through a thermally regulated die toward a vessel containing the first fluid. The tacky composition passes through the die and is cut by rotating blades in the pelletizing unit. Thermally controlled first fluid removes pellets from the cutter blade and transports them through an agglomerate catcher for removal of coarse and/or oversized pellets. The pellets are dewatered, by for example a centrifugal dryer or fluidized bed, to remove surface moisture from the pellets.

As those skilled in the extrusion art recognize, water temperature, rotational speed of the extruder cutter blades, and the flow rate of the melt through an extrusion die effect pellet geometries. The pellet temperature, both interior and the exterior, i.e., shell, also influence the pellet formation and drying.

Additional conventional processes may be utilized before or after drying, such as coating, enhanced crystallization, cooling operations, or other processing appropriate to the pelletized material.

The amount of antiblock composition present in the first fluid is sufficient to substantially coat the tacky composition particles as they contact the first fluid but yet not sufficient to interfere with processing. When water is the first fluid, the amount of antiblock composition is typically less than 5% by weight of the water. Preferably, the antiblock composition is present in less than 2wt.%, or less than 1.5 wt.%, or less than 1.0 wt.%, or less than 0.9 wt.%, or less than 0.75 wt.%, based on the weight of water.

Optionally, once separated from the first fluid, the tacky composition particles may be contacted with additional antiblock composition. The antiblock composition utilized in the first fluid may be the same or different from the additional antiblock composition.

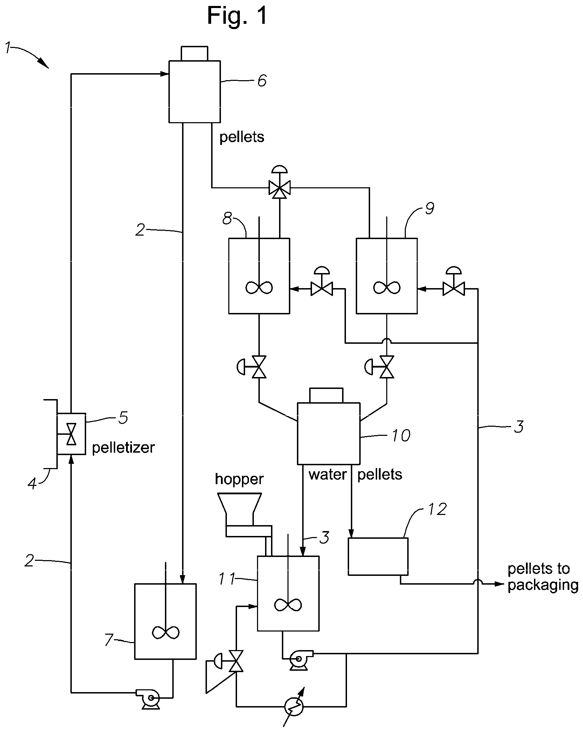

Figure 1 is a schematic diagram of an exemplary apparatus for preparing agglomeration resistant particles. The apparatus 1 shows a pelletizer liquid loop 2, i.e., water loop 2, operated with an additional warm liquid loop 3, i.e., warm water loop 3, to elevate pellet temperature while contacting the pellets with antiblock compositions. Water loop 2 is maintained at a temperature below the temperature of warm water loop 3. An exemplary temperature for water loop 2 is 5 to 10°C.

Referring to Figure 1, a tacky composition is prepared and transported to an extruder 4, which maintains favorable operating temperature. The extruder 4 is connected to an underwater pelletizing apparatus 5 that pelletizes the tacky composition and contacts the tacky composition with a first fluid, e.g., water. From the underwater pelletizing apparatus 5, the pellets travel to a drying apparatus 6, e.g., spin dryer, which removes excess water. The excess water removed from the pellets is optionally looped back to the underwater pelletizing apparatus 5 via pelletizer water loop 2 and antiblock reservoir 7.

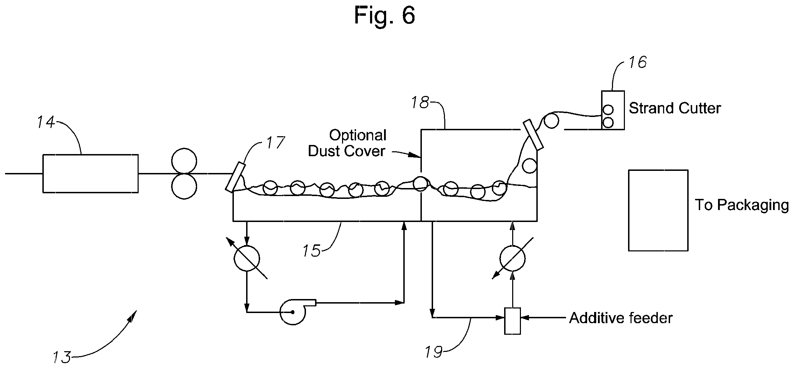

Pellets are transported from spin dryer 6 to one or more stirred tanks 8 and 9, which contain additional additives, including optionally the same and/or a different antiblock composition. Although two stirred tanks are shown in Figure 6, one stirred tank may be utilized as an alternative. If multiple stirred tanks are utilized, the apparatus can be operated in a semi-batch state. Pellets are processed in stirred tank 8, thereby removing additive compositions to coat pellets, while a second stirred tank 9 is filled with water and additive compositions. The flow of pellets is then alternated to the newly filled second stirred tank 9 thereby permitting the first stirred tank 8 to be refilled with water and additive compositions.

When contacted with warm water from the warm water loop 3 in the stirred tanks 8 and 9, the pellets simultaneously warm up, harden, and become coated with additives, e.g., antiblock composition. Pellets dusted/coated while at elevated temperature are less susceptible to loss of dust upon cooling and storage. Less free dust generation is generally preferred due to safety and or housekeeping concerns, e.g., the effect dust can have on the electrical hazard classification of the processing area. As a further safety precaution and as an alternative to the apparatus of Figure 1, additives, such as antiblock composition, could be added to water in a separate tank in a safe / dust free location and then circulated into storage tank 11.

From the stirred tanks 8 and 9, the pellets are transported to a second drying apparatus 10, e.g., spin dryer, which removes excess water. The excess water removed from the pellets is optionally looped back to a storage tank 11 via warm water loop 3, which maintains proper concentration of additives in the water feed and stirred tanks 8 and 9. Water loop 3 is maintained at above 10°C, or above 30°C, or at or above 50°C, or above 75°C.

The pellets travel from the second drying apparatus 10 to a cooling apparatus 12, where they are cooled, e.g., to ambient temperature or near ambient temperature, and prepared for packaging.

Certain low viscosity tacky materials, e.g., amorphous polyolefins, are less likely to plug process equipment, e.g., heat exchanger or extrusion dies. Therefore, just prior to extrusion, these materials may optionally be cooled to a temperature below their Ring and Ball softening point to aid in forming solid particles. For example, such materials may be cooled down to 10°C or 20°C or 30°C below their Ring and Ball softening point without producing a significant pressure drop in processing equipment.

Figure 6 is a schematic diagram of another exemplary apparatus for preparing agglomeration resistant particles. Such an apparatus may replace a cooling extruder configuration as described in U.S. Patent Publication No. 2009/0121372.

Referring to Figure 6, a strand cutting apparatus 13 includes a melt cooler 14, vessel 15 for holding a cooling liquid and option additives, and a strand cutter 16. First, a molten polymer stream travels to a melt cooler 13, which forms a solid or semi-solid strand. The polymer strand is optionally passed though rollers to a die 14. Preferably, the polymer strand exits the die 14 at an angle of from 0 to 90 degrees measured from parallel to vessel 15.

From the die, the polymer strand passes through vessel 15 having one or more zones for contacting the polymer strand with a cooling fluid, e.g., water, and optional additives, e.g., antiblock composition. As shown in Figure 6, vessel 15 includes two zones, wherein only the second zone contains antiblock composition. However, the antiblock composition may be present in one or more of a multiple zone vessel. The vessel 15 or portions thereof may optionally be covered with a dust cover 18. Optionally, an air knife removes excess fluid and/or antiblock composition. Preferably, any excess antiblock composition that is recycled to vessel 15 via recycle loop 19. From vessel 15 the polymer strand travels to a strand cutter 16 where the polymer is cut into pellets.

Preferably, vessel 15 includes more than one zone, i.e., stage, where liquid temperature is either increased or decreased to induce polymer crystallization, dusting, and drying. For example, in one embodiment a first zone is maintained at 20 to 30 °C, or 25°C. A second zone for dusting is maintained at 40 to 50°C or 45 °C, and a third zone for cooling is maintained at 20 to 35°C or 30°C.

Certain features of the present invention are described in terms of a set of numerical upper limits and a set of numerical lower limits. It should be appreciated that ranges from any lower limit to any upper limit are within the scope of the invention unless otherwise indicated.

The above description is intended to be illustrative, and should not be considered limiting. Persons skilled in the art will recognize that various modifications may be made without departing from the spirit and scope of the invention. Accordingly, this description will be deemed to include all such modifications that fall within the appended claims and their equivalents.

## EXAMPLES

The following examples, which are not intended to be limiting, present certain embodiments and advantages of the present compositions and methods. Unless otherwise indicated, all percentages are on a weight basis.

### Example 1

A tacky composition, Composition A, was prepared and pelletized in a simple tank. The pellets' resistance to agglomeration was observed at room temperature and at elevated temperatures.

Composition A was composed of 88.3-89.9 wt.% propylene-hexene copolymer, 4.55-5.45 wt.% maleated polypropylene, 4.55-5.45 wt.% tackifier, and an antioxidant. The propylene-hexene copolymer had a hexene content of 9-11 wt.%. The propylene copolymer exhibited a Melt Viscosity @ 190°C of 9720 cps, a Delta Hf as measured by DSC of 26 KJ/Kg. Pellets of Composition A were dusted with high density polyethylene.

Composition A was prepared, extruded, pelletized, spun dried, and then sent to a simple tank for dusting. The tank was filled with water and supplied by a heated water loop. The tank was not agitated other than by the movement of heated water. The tank turnover rate was about once per minute. Water temperature and antiblock content for various runs are reported in Table 1:

**TABLE 1**

|  | Water Temp. (°C) | Water Antiblock Content (wt.%) |
|---|---|---|
| Run 1 | 38 | 0.07 |
| Run 2 | 38 | 0.32 |
| Run 3 | 38 | 0.44 |
| Run 4 | 50 | 0.36 |
| Run 5 | 63 | 0.34 |
| Run 6 | 96 | 0.19 |

The resulting pellets were substantially dusted. The dusted pellets were tested for agglomeration resistance using ASTM D1895 Method B. Accordingly, the pellets were stored at 45°C for three days in a three inch (7.62 cm) vessel with 3500 grams of applied pressure. The tubes were opened after three days, rated according to how quickly the pellets yielded and whether pressure was required to break up any observed agglomeration. Pellets pelletized at 100°F (38°C) received a rating 1, i.e., collapsed while unwrapping. Pellets pelletized at 110°F (43°C) received a rating of 1.5, i.e., fell apart on their own in less than 10 seconds. Pellets pelletized at 120°F (49°C) received a rating of 3, i.e., agglomerated, but fell apart by tapping with finger.

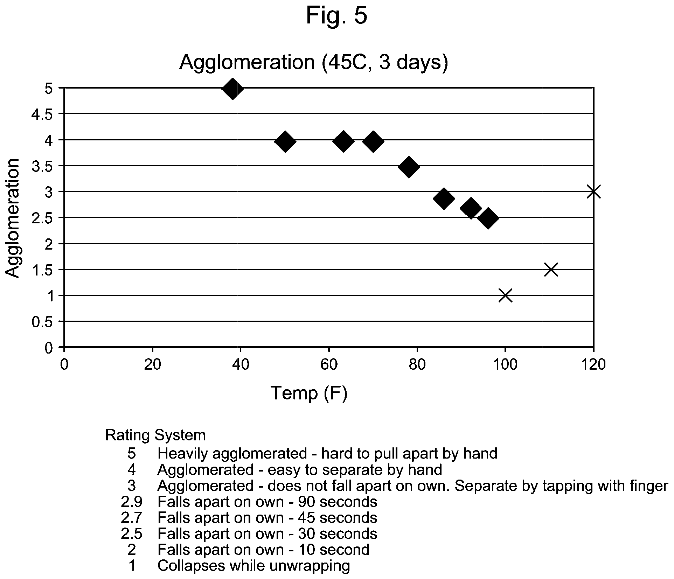

As shown in Figure 5, the pellets pelletized at a higher water temperature were less susceptible to agglomeration. The pellets pelletized at a higher temperature became free flowing faster, i.e., did not need to be forced/picked apart. The pellets pelletized at a lower temperature were agglomerated and did not achieve a free flowing state after time.

**Example 2**

A tacky composition, Composition B, was prepared, pelletized under water with an antiblock composition in the pelletizer water, and then dusted with a second antiblock composition. The pellets' resistance to agglomeration was observed at room temperature and at elevated temperatures.

Composition B was composed of 88.3-89.9 wt.% propylene-hexene copolymer, 4.55-5.45 wt.% maleated polypropylene, 4.55-5.45 wt.% tackifier, and an antioxidant. The propylene-hexene copolymer had a hexene content of 9-11 wt.%. The propylene copolymer exhibited a Melt Viscosity @ 190°C of 9800 mPa.sec and a Delta Hf as measured by DSC of 21 KJ/Kg.

The antiblock composition in the underwater pelletizer was a calcium stearate dispersion commercially available as Ligafluid from Peter Greven Fett-Chemie. Pellets were subsequently dusted with a low density polyethylene, which is commercially available as HA2454 from E.I. Du Pont De Nemours and Company.

Using an apparatus configuration shown in Figure 1, Composition B pellets where pelletized. The Ligafluid imparted a 0.1 wt.% calcium stearate coating over a substantial portion of the pellets' surface. During three runs, the dusting water loop was maintained at 100 °F (38°C), 110 °F (43°C), and 120°F (49°C) respectively. The dusting water loop was charged with 6.3 lbs (2.86 kg) of dust for the three runs. No additional dust was added for runs two and three.

The resulting pellets were substantially dusted. The dusted pellets were tested for agglomeration resistance using ASTM D1895 Method B. Accordingly, the pellets were stored at 45°C for three days in a three inch (7.62 cm) vessel with 3500 grams of applied pressure. Referring to Figure 5, Pellet samples were collected and placed in a three inch (7.62 cm) tube at 45°C and 3500 grams pressure. The tubes were opened after three days, rated according to how quickly the pellets yielded under pressure as described in Example 1.

Without being limited by theory, the pellets prepared at 120°F (49°C) appear to be an anomaly caused by inadequately maintained dust levels in the pelletizer water loop water, i.e., not charging the dust level at the start of each run, poor mixing, wax softening, or combinations thereof.

It is theorized that pelletizing at 120°F (49°C) and higher temperatures using the same apparatus could be achieved by providing a higher concentration of dust in the dusting tank water, agitating the dusting tank, and/or using a higher melting point polymer.

Example 3

The testing procedure of Example 2 was modified by using a different antiblock composition. The pellets' resistance to agglomeration was observed at room temperature and at elevated temperatures.

Using an apparatus configuration shown in Figure 1, Composition B pellets where prepared and coated with calcium stearate as described in Example 2 and then contacted with a heated water loop at 50°C. The heated water loop contained an additional antiblock composition. In a first run, the heated water contained an ethylene bisstearamide wax, which is commercially available as Acrawax C from Lonza Group. In a second run, the heated water contained a low density polyethylene, which is commercially available as HA2454 from E.I. Du Pont De Nemours and Company.

The pellets were dried over night at ambient temperature and subjected to oven aging under load at 50°C for 3 days. After oven aging, the pellets were cooled to ambient temperature and removed from a heating vessel described in ASTM testing procedures. The extent of agglomeration, if any, was observed. Results are provided in Table 2:

TABLE 2

| Sample | Type of Antiblock In Heated Water | Amount Of Antiblock In Heated Water (wt.%) | Oven Temp. (°C) | Days In Oven | Extra Weight Required To Collapse Pellets After Removal (g) |
|---|---|---|---|---|---|
| Composition A w/ 0.1 CaSt from Ligafluid | Atomized Acrawax C | 0.3 | 50 | 3 | 0 (collapsed ~15 seconds after removal) |
| Composition A w/ 0.1 CaSt from Ligafluid | Low density polyethylene powder | 1.0 | 50 | 3 | 0 (collapsed a few seconds after removal) |

As shown in Table 2, dusting the Composition B with both calcium stearate and low density polyethylene powder yielded favorable results, i.e., the pellets separated quickly with no force added to break them apart. It was observed that the pellets prepared with LDPE powder made a more uniform coating of the pellets compared to dry dusting techniques or wet dusting at room temperature. Without being limited by theory, it is believed that the elevated-temperature water causes a small portion of the polymer crystalline phase to melt at or near the pellet surface and become tacky thereby improving dusting.

It was observed that varying the pelletizer water loop temperature could lead to difficulty in forming pellets, i.e., the polymer should exit the die with sufficient viscosity to cut cleanly. Without being limited by theory, it is believed that the pelletizer water has limited effect on pellet cutting because very little heat can be transferred in the fraction of a second that it takes pellets to exit the extruder die hole. In contrast, pelletizing water temperature will have a greater impact on pellets over the next few seconds following cutting because the pellets leave the cutting area and move into the pelletizer water loop. In instances were the pellets were not coated quickly, they exhibited a greater susceptibility to agglomeration.

In addition to having a more uniform coating, the pellets exhibited faster crystallization and hardening compared to other dry or wet dusting techniques. Faster hardening pellets may be exposed to a load sooner after pelletizing thereby facilitating packaging. Moreover, packaging warm pellets prevented atmospheric moisture from condensing on the pellets thereby limiting concerns related to packaging wet pellets.

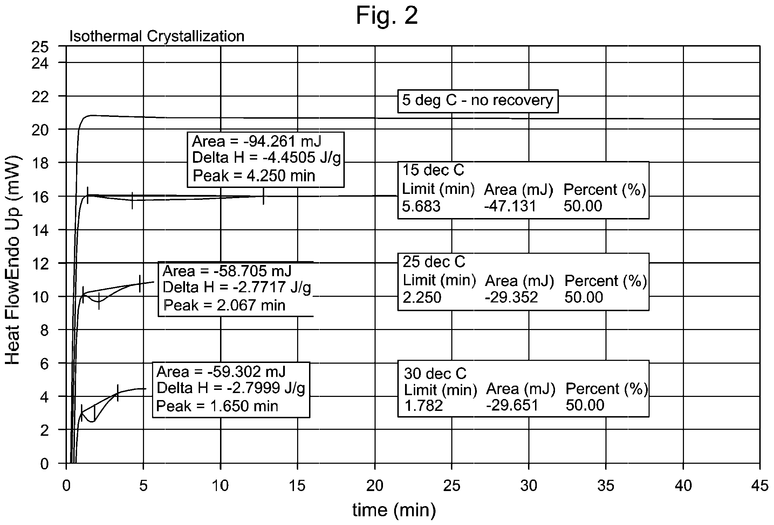

As shown in Figure 2 and referring to Table 3, isothermal DSC testing of Composition B shows that crystallization half-life decreases as pelletizing water temperature increases.

TABLE 3

| Series | Temperature (°C) | Crystallization Half-life of Composition B (Minutes) |
|---|---|---|
| 1 | 0 | >45 |
| 2 | 15 | 5.7 |
| 3 | 25 | 2.3 |
| 4 | 30 | 1.8 |

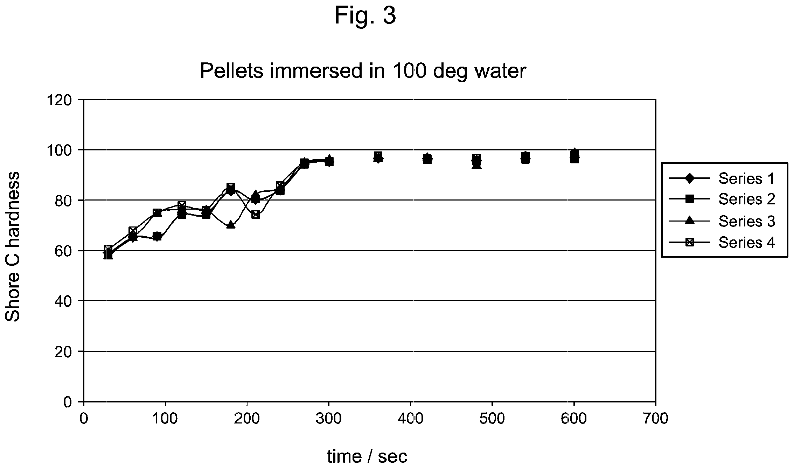

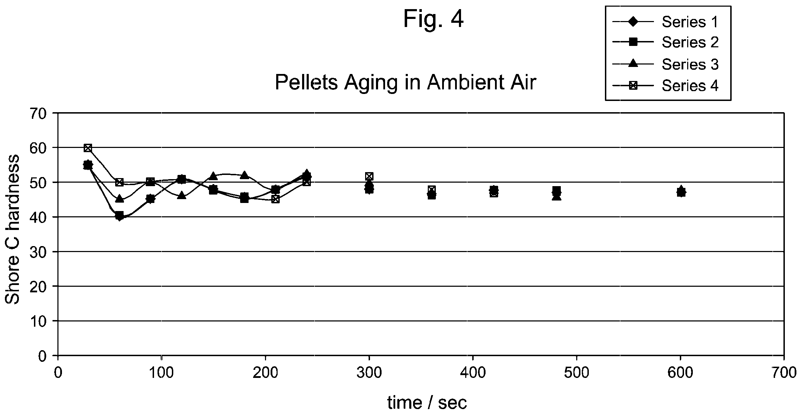

As shown in Figures 3 and 4, favorable hardening properties were exhibited.

**Example 4**

Two tacky compositions, Composition C and Composition D, were prepared and pelletized using a strand cutting apparatus.

Composition C was composed of 90.3-91.9 propylene homopolymer, 6.4-7.6 wax, 1.3-1.5 maleated polypropylene. The propylene homopolymer exhibited a Melt Viscosity @ 190°C of 1048 mPa.sec

Composition D was composed of 88.3-89.9 wt.% propylene-hexene copolymer, 4.55-5.45 wt.% maleated polypropylene, 4.55-5.45 wt.% tackifier, and an antioxidant. The propylene-hexene copolymer had a hexene content of 9-11 wt.%. The propylene copolymer exhibited a Melt Viscosity @ 190°C of 10,667 mPa.sec.

Referring to Figure 6, pellets of Composition C were prepared using a wet cut water slide pelletizer. The pelletizing apparatus consisted of a twin screw extruder with pellet feed system, die head, water slide system, pelletizer, and spin dryer. The water slide was ten feet long and had five spray stations along the length of the water slide. The sprays provided extra cooling and pushed the polymer strand down into the water flow so that the polymer did not float.

It was generally observed that better heat transfer was possible if the polymer strand was submerged.

During a first series of runs using Composition C, the extruder was maintained at 113.3°C (236°F). This run produced uniform cylindrical pellets that were slightly flattened. Without being limited by theory, it is believed that the flattened shape was due to the pressure exerted on the polymer strand by the pelletizer feed rollers. The uncut strands were uniformly round. The pellets were spun dried. Pellet size was 2.5 g / 50 pellets.

At higher temperatures, die head pressure decreased which reduced back mixing. At such temperatures small quantities of unmelted pellets were observed. Die head pressure was increased by using different size die heads.

In alternative configuration, a ten foot water bath extension was added to increase cooling. No spray stations were utilized on the extended water bath. The following combinations of melt temperatures, die sizes and pellets sizes were prepared:

**TABLE 5**

| Melt Temperature (°C; °F) | Die Hole Size (mm) | Pellet Size (g/50 pellets) | Notes |
|---|---|---|---|
| 113.3; 236 | 3 | 2.5 | Uniform cylindrical pellets |
| 116.7; 242 | 4.5 | 1.0 | Uniform flattened pellets |
| 126.1; 259 | 6.5 | None | Too soft to cut |
| 126.7; 260 | 4.5 | 0.9 w/ variation | Flat pellets |
| 128.3; 263 | 3 | 0.2 | Uniform flat pellets |

In a second series of runs using Composition D, the extruder melt temperature was 132.2°C (270°F). Consistent uniform strands were prepared, but the strands were too soft to pelletize. Two ten foot sections were added to the water bath for a 8.84 m (29 foot) total length. The extension sections did not utilize spray stations. With the longer water bath, Composition D was pelletized. In an alternative configuration, the pelletizer feed rolls were sped up to stretch and thin the strand to further promote strand cooling.

As shown by the experiments of Example 4, a strand cutting device may be used to pelletize tacky compositions.

**Example 5**

A tacky composition, Composition E, was prepared, pelletized under water and then dusted with a antiblock composition while Composition E is in contact with the palletizing water. The pellets' resistance to agglomeration was observed at elevated temperatures.

Composition E was composed of 99.5 wt.% propylene-hexene copolymer and an antioxidant. The propylene-hexene copolymer had a hexene content of 9-11 wt.%.

The dust used for this experiment was DuPont Coathylene HA2454 (low density polyethylene). The initial charge was 1 wt% of the pellet water inventory wherein the dust was added over the period of one hour. The target temperature for the start of pelletization was 100°F (38°C). Dust was continually added to match approximately 1 wt % of the extruder output. During the pelletization period pellet water temperature was adjusted over a range of 85 to 105 °F (29 to 41°C) to see the effect of the temperature.

Referring to Figure 1, the HA2454 was added to antiblock reservoir 7 and the liquid loop 2 was held at approximately 85 to 105 °F (29 to 41°C) during the experiment. The antiblock reservoir 7 was equipped with a separate IKA pump in which to add the HA2454. Additionally, the antiblock reservoir 7 was equipped with an agitator turbine to keep the HA2454 sufficiently suspended in solution. No other antiblock was added to the system. Water from the spin dryers 6 was returned to the antiblock reservoir at the top of the reservoir. Conversely, the flow to the pelletizer 5 was taken from the bottom of the antiblock reservoir to keep any HA2454 that may be floating at the top of the reservoir from plugging the lines. Furthermore, the pellets exited the spin dryers 6 and bypassed the remainder of the equipment shown in Figure 1. The pellets were then sent to packaging. In other words, in this example, the wet dusting occurred in one step wherein the HA2454 was added to the pelletizing water that makes direct contact with the underwater pelletizing apparatus 5 and no other antiblock agent was used either before or after the HA2454 pellet contact.

**TABLE 6**

| Time | Dust in water (wt%) | Water Temperature (°C; °F) | Pellet Size (g/50) | Dust on pellets (wt%) |
|---|---|---|---|---|
| 10:05 am | | | | |
| 10:55 am | 0.4 | 35.3; 95.5 | 1.8 | 0.65 |

(continued)

| Time | Dust in water (wt%) | Water Temperature (°C; °F) | Pellet Size (g/50) | Dust on pellets (wt%) |
|---|---|---|---|---|
| 11:20 am | 0.62 | 32.2; 89.9 | 4.5 | 0.39 |
| 11:35 am | 0.5 | 35; 95 | 4.5 | 0.12 |
| 11:55 am | 0.67 | 36.4; 97.5 | 4.6 | 0.48 |
| 12:15 pm | 0.7 | 40.4; 104.8 | 4.4 | 0.28 |
| 12:40 pm | 0.73 | 31.5; 88.7 | 4.6 | 0.52 |

Table 6 shows that the dust concentration on the pellets ranged from 0.12 to 0.65 wt%.

Agglomeration of Composition E was tested in two ways: (i) short term testing of fresh pellets at ambient conditions and (ii) long term testing of aged pellets under heat. For the short term testing, two samples of fresh pellets were collected at the outlet of the spin dryer and immediately placed in PVC tubes with compressing weights equivalent to the load of two stacked 500 kg supersacks. These tubes were allowed to sit for a day under the load and then the bottoms were opened up. When this was done, the pellets flowed freely out which indicates that there would be no problem with wet-dusted pellets agglomerating as they completed their crystallization and hardened in their package.

Long term testing was done in a similar manner as the short term testing wherein the samples were poured into PVC tubes and placed under load. A sample of Composition E using the Ligafluid, a calcium stearate dispersion, was also set up as a control. The loaded tubes were placed in a 55°C oven for two weeks, removed, and allowed to cool. The PVC tube was then removed from around the pellet sample with the compressing load still in place. This left free-standing columns of agglomerated pellets supporting the compressing weights. The amount of time required for the column of pellets to collapse under the load was then measured which are shown in Table 7. Also, the comparative sample is shown wherein only calcium stearate was used as an antiblock with no HA2454 was added.

**TABLE 7**

| Time | Dust on pellets (wt%) | Oven Temperature (°C) | Time in oven (days) | Time to collapse (min) |
|---|---|---|---|---|
| 11:55am | 0.48 | 55 | 8 | 6 |
| 12:15 pm | 0.28 | 55 | 14 | 11 |
| 12:40 pm | 0.52 | 55 | 14 | 12 |
| Comparative | 0.05 wt% CaSt from Ligafluid | 55 | 14 | Would not collapse; heavily agglomerated |

**Claims**

1. A method for preparing agglomeration resistant particles comprising the steps of:

    a. providing tacky composition particles having an unconfined yield strength of at least 718 Pa (15 lbs/ft$^2$) at or above 25°C as measured by ASTM D6773;
    b. increasing the tackiness of the tacky composition particles by contacting the tacky composition particle with a first fluid at a temperature of at least 25°C; and
    c. contacting the tacky composition particles with an antiblock composition while the tacky composition particles are in contact with the first fluid wherein the first fluid is at a temperature of at least 25°C,

    wherein the tacky composition particles are polyolefin pellets and are at least partially coated with the antiblock composition.

2. The method for preparing agglomeration resistant particles of claim 1, wherein the tacky composition comprises a polyolefin composition comprising at least 75 weight percent propylene, based on the weight of the polymer composition.

3. The method for preparing agglomeration resistant particles of any one of claims 1 to 2, wherein the polymer composition comprises propylene and a comonomer selected from the group consisting of butene, hexene, octene, or combinations thereof.

4. The method for preparing agglomeration resistant particles of any of the preceding claims, wherein the first fluid is an aqueous based fluid.

5. The method for preparing agglomeration resistant particles of any of the preceding claims, wherein the first fluid is an aqueous based fluid at a temperature from 25°C to 75°C.

6. The method for preparing agglomeration resistant particles of any of the preceding claims, wherein the first fluid is substantially free of surfactant.

7. The method for preparing agglomeration resistant particles of any of the preceding claims, wherein the tacky composition particles contact the first fluid in an underwater pelletizer.

8. The method for preparing agglomeration resistant particles of any of the preceding claims, wherein the tacky composition particles contact the first fluid in a fluidized bed.

9. The method for preparing agglomeration resistant particles of any of the preceding claims, wherein the antiblock composition is a polymer, salt of an organic acid, or combinations thereof

10. The method for preparing agglomeration resistant particles of any of the preceding claims, wherein the antiblock composition is a polymer.

11. The method for preparing agglomeration resistant particles of any of the preceding claims, wherein the antiblock composition is a polymeric powder.

12. The method for preparing agglomeration resistant particles of any of the preceding claims, wherein the antiblock composition is a low density polyethylene powder.


**Patentansprüche**

1. Verfahren zur Herstellung von gegen Agglomeration resistenten Partikeln, bei dem

    a. klebrige Zusammensetzungspartikel bereitgestellt werden, die eine Schüttgutfestigkeit (unconfined yield strength) von mindestens 718 Pa (15 lbs/ft$^2$) bei oder oberhalb von 25 °C, gemessen mittels ASTM D6773, aufweisen;
    b. die Klebrigkeit der klebrigen Zusammensetzungspartikel erhöht wird, indem die klebrigen Zusammensetzungspartikel mit einer ersten Flüssigkeit bei einer ersten Temperatur von mindestens 25 °C in Kontakt gebracht werden; und
    c. die klebrigen Zusammensetzungspartikel mit einer Antiblockzusammensetzung in Kontakt gebracht werden, während sich die klebrigen Zusammensetzungspartikel in Kontakt mit der ersten Flüssigkeit befinden, wobei die erste Flüssigkeit eine Temperatur von mindestens 25 °C aufweist,

wobei die klebrigen Zusammensetzungspartikel Polyolefin-Pellets sind und mindestens teilweise mit der Antiblockzusammensetzung beschichtet sind.

2. Verfahren zur Herstellung von gegen Agglomeration resistenten Partikeln nach Anspruch 1, bei dem die klebrige Zusammensetzung eine Polyolefinzusammensetzung umfasst, die mindestens 75 Gew.-% Propylen auf der Basis des Gewichts der Polymerzusammensetzung enthält.

3. Verfahren zur Herstellung von gegen Agglomeration resistenten Partikeln nach einem der Ansprüche 1 bis 2, bei dem die Polymerzusammensetzung Propylen und ein Comonomer, ausgewählt aus der Gruppe bestehend aus Buten, Hexen, Octen oder Kombinationen davon, umfasst.

4. Verfahren zur Herstellung von gegen Agglomeration resistenten Partikeln nach einem der vorhergehenden Ansprüche, bei dem die erste Flüssigkeit eine Flüssigkeit auf wässriger Basis ist.

**5.** Verfahren zur Herstellung von gegen Agglomeration resistenten Partikeln nach einem der vorhergehenden Ansprüche, bei dem die erste Flüssigkeit eine Flüssigkeit auf wässriger Basis bei einer Temperatur von 25 °C bis 75 °C ist.

**6.** Verfahren zur Herstellung von gegen Agglomeration resistenten Partikeln nach einem der vorhergehenden Ansprüche, bei dem die erste Flüssigkeit im Wesentlichen frei von Tensiden ist.

**7.** Verfahren zur Herstellung von gegen Agglomeration resistenten Partikeln nach einem der vorhergehenden Ansprüche, bei dem die klebrigen Zusammensetzungspartikel mit der ersten Flüssigkeit in einem Unterwassergranulator in Kontakt treten.

**8.** Verfahren zur Herstellung von gegen Agglomeration resistenten Partikeln nach einem der vorhergehenden Ansprüche, bei dem die klebrigen Zusammensetzungspartikel mit der ersten Flüssigkeit in einer Wirbelschicht in Kontakt treten.

**9.** Verfahren zur Herstellung von gegen Agglomeration resistenten Partikeln nach einem der vorhergehenden Ansprüche, bei dem die Antiblockzusammensetzung ein Polymer, ein Salz einer organischen Säure oder eine Kombination davon ist.

**10.** Verfahren zur Herstellung von gegen Agglomeration resistenten Partikeln nach einem der vorhergehenden Ansprüche, bei dem die Antiblockzusammensetzung ein Polymer ist.

**11.** Verfahren zur Herstellung von gegen Agglomeration resistenten Partikeln nach einem der vorhergehenden Ansprüche, bei dem die Antiblockzusammensetzung ein Polymerpulver ist.

**12.** Verfahren zur Herstellung von gegen Agglomeration resistenten Partikeln nach einem der vorhergehenden Ansprüche, bei dem die Antiblockzusammensetzung ein Pulver aus Polyethylen niedriger Dichte ist.

**Revendications**

**1.** Procédé de préparation de particules résistantes à l'agglomération comprenant les étapes de :

a. fourniture de particules de composition adhérente ayant une limite d'élasticité non confinée d'au moins 718 Pa (15 livres/pied$^2$)_à ou au-dessus de 25 °C telle que mesurée selon l'ASTM D6773 ;
b. augmentation de l'adhérence des particules de composition adhérente par mise en contact des particules de composition adhérente avec un premier fluide à une température d'au moins 25°C ; et
c. mise en contact des particules de composition adhérente avec une composition antiadhérente tandis que les particules de composition adhérente sont en contact avec le premier fluide, le premier fluide étant à une température d'au moins 25 °C,

les particules de composition adhérente étant des granules de polyoléfine et étant au moins partiellement enrobées avec la composition antiadhérente.

**2.** Procédé de préparation de particules résistantes à l'agglomération de la revendication 1, dans lequel la composition adhérente comprend une composition de polyoléfine comprenant au moins 75 pour cent en poids de propylène, sur la base du poids de la composition de polymère.

**3.** Procédé de préparation de particules résistantes à l'agglomération de l'une quelconque des revendications 1 à 2, dans lequel la composition de polymère comprend du propylène et un comonomère choisi dans le groupe constitué des butène, hexène, octène, ou des combinaisons de ceux-ci.

**4.** Procédé de préparation de particules résistantes à l'agglomération de l'une quelconque des revendications précédentes, dans lequel le premier fluide est un fluide à base aqueuse.

**5.** Procédé de préparation de particules résistantes à l'agglomération de l'une quelconque des revendications précédentes, dans lequel le premier fluide est un fluide à base aqueuse à une température de 25 °C à 75 °C.

**6.** Procédé de préparation de particules résistantes à l'agglomération de l'une quelconque des revendications précédentes, dans lequel le premier fluide est sensiblement exempt de tensioactif.

7. Procédé de préparation de particules résistantes à l'agglomération de l'une quelconque des revendications précédentes, dans lequel les particules de composition adhérente entrent en contact avec le premier fluide dans un granulateur immergé.

8. Procédé de préparation de particules résistantes à l'agglomération de l'une quelconque des revendications précédentes, dans lequel les particules de composition adhérente entrent en contact avec le premier fluide dans un lit fluidisé.

9. Procédé de préparation de particules résistantes à l'agglomération de l'une quelconque des revendications précédentes, dans lequel la composition antiadhérente est un polymère, un sel d'un acide organique, ou des combinaisons de ceux-ci.

10. Procédé de préparation de particules résistantes à l'agglomération de l'une quelconque des revendications précédentes, dans lequel la composition antiadhérente est un polymère.

11. Procédé de préparation de particules résistantes à l'agglomération de l'une quelconque des revendications précédentes, dans lequel la composition antiadhérente est une poudre polymère.

12. Procédé de préparation de particules résistantes à l'agglomération de l'une quelconque des revendications précédentes, dans lequel la composition antiadhérente est une poudre de polyéthylène basse densité.

# Fig. 1

## Fig. 2

Isothermal Crystallization

## Fig. 3

### Pellets immersed in 100 deg water

Fig. 4

Pellets Aging in Ambient Air

Series 1
Series 2
Series 3
Series 4

Shore C hardness vs time / sec

## Fig. 5

### Agglomeration (45C, 3 days)

Rating System
5   Heavily agglomerated - hard to pull apart by hand
4   Agglomerated - easy to separate by hand
3   Agglomerated - does not fall apart on own. Separate by tapping with finger
2.9  Falls apart on own - 90 seconds
2.7  Falls apart on own - 45 seconds
2.5  Falls apart on own - 30 seconds
2   Falls apart on own - 10 second
1   Collapses while unwrapping

EP 2 350 170 B1

## Fig. 6

Strand Cutter

Optional
Dust Cover

To Packaging

Additive feeder

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7328547 B
- US 7232535 B
- US 7137235 B
- US 7122584 B
- US 7101926 B
- US 6716527 B
- US 6616968 B
- US 6533564 B
- US 6458300 B
- US 6426026 B
- US 6335095 B
- US 6228902 B
- US 6120899 A
- US 6177516 B
- US 5942304 A
- US 5895617 A
- US 5733645 A
- US 5695881 A
- US 5650370 A
- US 5629050 A
- US 5609892 A
- US 5594074 A
- US 5403528 A
- US 5143673 A
- US 5041251 A
- US 4897452 A
- US 20070270538 A
- US 20060093764 A
- US 20040209082 A
- US 20020033131 A
- US 4540753 A
- US 4569810 A
- US 4663099 A
- US 20090121372 A

**Non-patent literature cited in the description**

- **VERSTRATE et al.** *Macromolecules,* 1988, vol. 21, 3360
- **T. SUN ; P. BRANT ; R. R. CHANCE ; W. W. GRAESSLEY.** *Macromolecules,* 2001, vol. 34 (19), 6812-6820
- *Rev. Macromol. Chem. Phys.,* vol. C29 (2&3), 285-297